# EUROPEAN PATENT APPLICATION

(11) **EP 4 199 412 A1**
(43) Date of publication of application: **21.06.2023**
(21) Application number: 21214371.3
(22) Date of filing: 14.12.2021
(51) Int. Cl.: H04L 9/08, H04B 10/70

(54) **METHOD FOR ALL-OPTICAL PASSIVE DECOY-STATE QUANTUM KEY DISTRIBUTION**

(71) Applicant: Fraunhofer-Gesellschaft zur Förderung der angewandten Forschung e.V., 80686 München (DE); Humboldt-Universität zu Berlin, 10099 Berlin (DE)
(72) Inventor: Steinlechner, Fabian, 07745 Jena (DE); Marques Muniz, André Luiz, 07745 Jena (DE); Spiess, Christopher, 07743 Jena (DE); Ramelow, Sven, 14552 Michendorf (DE); Pavlovic Tucakovic, Natasa, 07743 Jena (DE)
(74) Representative: Louis Pöhlau Lohrentz

(57) **Abstract**

It is claimed a method for decoy state quantum key generation comprising the steps, preferably in this order,
i) generation of at least two sequences of laser pulses by a pulse generation means (2);
ii) conversion of the at least two sequences of laser pulses into at least two sequences of pulses with random phase by a phase generation means (3), whereby each pulse of each sequence has a random phase;
iii) conversion of the sequences of pulses with random phase into one or more sequences of pulses with random phase and an additional degree of freedom in a conversion means (4);
iv) combination of at least two pulses of the one or more sequences of pulses with random phase and the additional degree of freedom to generate a decoy state, and continue the combination for subsequent pulses in order to generate a sequence of pulses comprising decoy states. According to the invention, the combination in step iv) is an interference of the at least two pulses in an interference means (5).

## Description

The present invention provides a method according to the preamble of claim 1 and a system according to the preamble of claim 12.

Quantum cryptography, namely quantum key distribution (QKD) enables a secure point-to-point communication. The security provided by quantum key distribution (QKD) is harnessed to the laws of quantum physics and thus independent of algorithm or computational power. One of the most used quantum key distribution (QKD) protocols is the so-called decoy state quantum key distribution (QKD) protocol.

The decoy state quantum key distribution (QKD) protocol uses multiple intensity levels at the transmitter's source, i.e. qubits are transmitted by the source using randomly chosen intensity levels, e.g. one signal state and several decoy states, resulting in varying photon number statistics. This highly increases the transmission rate and the possible channel lengths. This is unlike many other quantum key distribution (QKD) protocols which rely on single photon events. At the end of the transmission for the key generation the source announces publicly which intensity level has been used for the transmission of each qubit. The source and the receivers are able to detect for example a photon number splitting attack by monitoring the bit error rate of each state separately (signal and decoy states). In case of a detected attack the key is not used for encryption and decryption of a message.

Known sources for a prepare and measure BB84 decoy state quantum key distribution (QKD) protocol uses modulated lasers to dynamically switch each polarization basis up to MHz speed in order to generate four polarization states for the key generation in a random sequence. In addition, in known sources a quantum random number generator (QRNG) is necessary to actively select and switch the states without any bias in order to ensure the random sequence generation. The weak coherent pulses necessary for decoy state quantum key distribution (QKD) are only achieved by high-speed intensity modulators or laser diodes and synchronization of several electronic components leading to a challenging and costly source.

It is an object of the present invention to provide an improved, cost-efficient, easier, and more secure method and system for decoy state quantum key distribution.

According to the present invention, a method for decoy state quantum key distribution is provided according to claim 1.

The object is achieved by a method for decoy state quantum key generation comprising the steps, preferably in this order,
i) generation of at least two sequences of laser pulses by a pulse generation means;
ii) conversion of the at least two sequences of laser pulses into at least two sequences of pulses with random phase by a phase generation means, whereby each pulse of each sequence has a random phase;
iii) conversion of the sequences of pulses with random phase into one or more sequences of pulses with random phase and an additional degree of freedom in a conversion means;
iv) combination of at least two pulses of the one or more sequences of pulses with random phase and the additional degree of freedom to generate a decoy state, and continue the combination for subsequent pulses in order to generate a sequence of pulses comprising decoy states;

According to the invention, the combination in step iv) is an interference of the at least two pulses in an interference means.

This object is further achieved by a source for decoy state quantum key generation according to claim 12.

The object is achieved by a source for decoy state quantum key generation, comprising a pulse generation means, a phase generation means, a conversion means, a interference means, a splitting means, a detection means, and an attenuation means in order to generate a sequence of pulses comprising decoy states, and
the splitting means, the detection means and the attenuation means are arranged behind the interference means in order to split the sequence of pulses comprising decoy states into a first part to be measured by the detection means and a second part to be attenuated by the attenuation means and transmitted to a receiver, According to the invention, the pulse generation means generates at least two sequences of laser pulses, and
the phase generation means is arranged behind the pulse generation means and is pumped by the at least two sequences of laser pulses and generates two sequences of pulses with random phase, whereby each pulse of each sequence has a random phase, and
either the conversion means is arranged behind the phase generation means or the phase generation means is arranged in the conversion means, in order to add an additional degree of freedom to the sequences of pulses with random phase by the conversion means to generate one or more sequences of pulses with random phase and an additional degree of freedom, and
the interference means is arranged behind the conversion means in order combine at least two pulses each of the one or more sequences of pulses with random phase and the additional degree of freedom in order to generate a sequence of pulses comprising decoy states.

An advantage of the inventive method and the inventive system is that it is an all-optical passive scheme for the generation of the random phase and thus the generation of the random intensity of the decoy state. That means by the use of the inventive method and the inventive system there is no need for an active intensity modulation for example by the use of an electrooptical modulator in order to generate decoy states and there is no need for an additional quantum random number generator.

In a preferred embodiment, a decoy state with random intensity and a random mode of the degree of freedom is generated by the random phases of the two pulses in step iv) and/or in the interference means. The advantage of this embodiment is, that the randomness of all parameter for the quantum key generation are ensured by the randomness of the phases of the two pulses.

In a preferred embodiment, in step iv) by the combination of at least two pulses of the one or more sequences of pulses with random phase and the additional degree of freedom a decoy state or a vacuum state is generated in order to generate a sequence of pulses comprising decoy states and vacuum states.

In a preferred embodiment, the interference means is arranged behind the conversion means in order combine at least two pulses each in order to generate a sequence of pulses comprising decoy states and vacuum states.

The vacuum state is an optical pulse with zero intensity. The vacuum state acts as reference level for parameter estimation, like error rate or single photon yield. The advantage of this embodiment is the possibility of a simplified, practical, decoy state protocol with the signal states, decoy states and vacuum states. The decoy protocol describes that several intensities are used, but a few are already sufficient and have been proven secure.

In a preferred embodiment, the method and/or the source generate decoy states with two, or three, or more intensity levels. In a preferred embodiment, the vacuum state is one of the three or more intensity levels. The vacuum state can be seen as a special decoy state with no intensity or with very low intensity. Very low intensity means here less intensity as the signal level.

In a preferred embodiment, the at least two sequences of laser pulses are generated by the pulse generation means in step i) by a pulsed laser and at least one generation beam splitter, or a generation polarizing beam splitter, or by a continuous wave laser, a shutter and at least one generation beam splitter or a generation polarizing beam splitter. In a preferred embodiment, the pulse generation means is a pulsed laser and a generation beam splitter, or a continuous wave laser, a shutter and a generation beam splitter, or a generation polarizing beam splitter.

In a preferred embodiment, the at least two sequences of laser pulses comprise laser pulses with a repetition rate in the range of 1 HZ to 10 GHz, preferably in the range of 1 MHz to 1 GHz. In a preferred embodiment, the pulse duration of the laser pulses is in the range of 1 ps to 1 ms, preferably in the range of 10 ps to 10 ns, more preferably in the range of 100 ps to 1 ns. In a preferred embodiment, the maximal pulse duration of the laser pulses depends on the resonator of the phase generation means.

In a preferred embodiment, the maximal intensity of the pulsed pump beam is above the threshold of the phase generation means, preferably above the threshold of an optical parametric oscillator. In a preferred embodiment, the intensity between two pump pulses is below the threshold of the phase generation means, preferably of the optical parametric oscillator. The advantage of this embodiment is the generation of true randomness by pumping the phase generation means in step ii) with these pulses.

In a preferred embodiment, the at least two sequences of laser pulses in step ii) are converted by optical parametric oscillation into at least two sequences of pulses with random phase. In a preferred embodiment, the conversion means comprises at least one or more optical parametric oscillator.

Another advantage of the inventive method and the inventive system is that the optical parametric oscillator is used as a quantum random number generator to ensure the randomness of all parameter for quantum key generation. The advantage is the use of an all-optical element without any electronic components which enables the generation of sequences of pulses with random phase with a high repetition rate.

In a preferred embodiment, in order to generate the at least two sequences of pulses with random phase the phase generation means, preferably in step iii), comprise either
at least two optical parametric oscillators, whereby each optical parametric oscillator generates one sequence of pulses with random phase, and/or
one or more optical parametric oscillators pumped in two different directions, whereby each of the one or more optical parametric oscillator generates two sequences of pulses with random phase by the two different pump directions.

In a preferred embodiment, the optical parametric oscillator comprises a non-linear optical medium and an optical resonator. The resonator is designed to resonate at an output wavelength. The pump pulses and the output pulses constantly move back and forth in the resonator when the pulses are amplified in the resonator. The optical parametric oscillator reaches a stable state if the amplification is at least equal to the inherent loss of the optical parametric oscillator, that means when the intensity of the pump pulses is above the threshold. The pump pulses are the pulses of the sequence of laser pulses, the output pulses are the pulses of the sequence of pulses with random phase.

In a preferred embodiment, the sequence of pulses with random phase are generated by pumping the optical parametric oscillator with the sequences of laser pulses. In a preferred embodiment, the sequences of laser pulses comprise pulses with an intensity above the threshold of the optical parametric oscillator.

In a preferred embodiment, the random phase of each pulse is a random result due to quantum noise in the optical parametric oscillator, preferably by a non-equilibrium phase transition from below to above the threshold in the optical parametric oscillator. In the stable state the optical parametric oscillator emits an output pulse with a phase related to the pump pulse depending each time new on each stabilization process. Thus, by pumping the optical parametric oscillator with laser pulses with a maximal intensity above the threshold, a new output pulse with random phase is generated by the optical parametric oscillator. To restart the stabilization process, the intensity between two laser pulses has to be below the threshold. The stable output pulse of the optical parametric oscillator has one of two possible opposite phases *π* and 0. Which of the two possible phases each pulse possess is a random result due to quantum noise. These quantum noise allows the generation of true randomness by the optical parametric oscillator.

In a preferred embodiment, the phase of each pulse of the sequence of pulses with random phase is either *π* and 0, preferably random either *π* and 0.

In a preferred embodiment, the optical parametric oscillator is a degenerated parametric oscillator.

In a preferred embodiment, the optical parametric oscillator is a µ-ring resonator comprising a non-linear optical medium and a resonator. The advantage of the µ-ring resonator is the high free-spectral range beyond 200 GHz with very high quality and allows a sharp resonance and strong amplification.

In a preferred embodiment, two or more optical parametric oscillators are used in parallel and/or sequential. Parallel means here, that each optical parametric oscillator is pumped by a separate sequence of laser pulses. Sequential means here, that one sequence of laser pulses is used to pump more sequential optical parametric oscillators successive. The parallel and/or sequential use of more optical parametric oscillators allows for example to increase the repetition rate of the sequences of pulses with random phase, for example by a time delay of the output of the additional optical parametric oscillator and the recombination of all sequences of pulses with random phase behind the optical parametric oscillators.

In a preferred embodiment, the phases of the outcome pulses of one or more parallel and/or sequential optical parametric oscillators are shifted by a phase shifting means. The advantage of this embodiment leads to a non-full deconstructive interference in the interference means in step iv) and due to that in a generation of additional intensities in the decoy states.

In a preferred embodiment, the additional degree of freedom is the polarization, and/or the orbital angular momentum, and/or the time, and/or the frequency.

In a preferred embodiment, the additional degree of freedom is the polarization and the random modes of the degree of freedom of the decoy state is the polarization state out of two mutually unbiased bases, preferably each non-orthogonal basis comprises two orthogonal polarization states.

In a preferred embodiment for polarization as the additional degree of freedom, the pulses with random phase are converted in step iii) by interference of two pulses with random phase, preferably by interference on a conversion polarizing beam splitter in an unbalanced Mach-Zehnder interferometer. In a preferred embodiment, the two interfering pulses in the unbalanced Mach-Zehnder interferometer are two subsequent pulses of the same sequence or two pulses of two different sequences of pulses with random phase.

In a preferred embodiment for polarization as the additional degree of freedom, the conversion means is/are one or more unbalanced Mach-Zehnder interferometer/s. In a preferred embodiment, the unbalanced Mach-Zehnder interferometer comprises a first beam splitter as input and the conversion polarizing beam splitter as an output, whereby between the first beam splitter and the conversion polarizing beam splitter two arms with different path length are formed, preferably a short arm and a long arm. In a preferred embodiment, the short arm and long arm are formed by a free-space path with mirrors or by fibers. In a preferred embodiment, the difference of the path length of the two arms is n-times the repetition rate of the sequences of pulses with random phase with *n* = 1, 2, ... *m*. The difference of the path length is used for an interference of subsequent pulses.

In a preferred embodiment for polarization as the additional degree of freedom, the sequences of pulses with random phase entering the unbalanced Mach-Zehnder interferometer possesses a polarization, preferably a linear polarization, more preferably a horizontal or vertical linear polarization. In a preferred embodiment, the entering pulse in the unbalanced Mach-Zehnder interferometer is split into two pulses with equal intensity by the first beam splitter. In a preferred embodiment, the polarization between the two pulses is shifted by 45°, preferably by a half-wave plate, preferably at by a half-wave plate 22,5°.

In a preferred embodiment for polarization as the additional degree of freedom, the two pulses with random phase which interfere are a first pulse and a second subsequent pulse, preferably of one sequence of pulses with random phase, whereby the first pulse is delayed in the unbalanced Mach-Zehnder interferometer in order to interfere with the second subsequent pulse on the conversion polarizing beam splitter.

In a preferred embodiment for polarization as the additional degree of freedom, the sequences of pulses with random phase and the additional degree of freedom behind the unbalanced Mach-Zehnder interferometer possess a random phase and a random polarization, preferably random linear diagonal or linear antidiagonal polarization.

In a preferred embodiment for polarization as the additional degree of freedom, the pulses with random phase are converted in step iii) by interference of two pulses with random phase, preferably by interference on a conversion polarizing beam splitter in a Michelson interferometer. In a preferred embodiment, the two interfering pulses in the Michelson interferometer are two pulses of two different sequences of pulses with random phase.

In a preferred embodiment for polarization as the additional degree of freedom, the conversion means is a Michelson interferometer. In a preferred embodiment, the Michelson interferometer comprises the conversion polarizing beam splitter and two reflection elements forming two arms in the Michelson interferometer.

In a preferred embodiment, the Michelson interferometer is pumped by a sequence of laser pulses. In a preferred embodiment, the sequence of laser pulses is spilt up in two sequences of laser pulses by the conversion polarizing beam splitter of the Michelson interferometer. In a preferred embodiment, one sequence of pulses with random phase is generated in each arm of the Michelson interferometer by one optical parametric oscillator arranged in each arm. In a preferred embodiment, a half-wave plate is arranged in one arm of the Michelson interferometer in order to cause a polarization rotation behind the conversion polarizing beam splitter to pump each optical parametric oscillator with laser pulses with the same polarization.

In a preferred embodiment for polarization as the additional degree of freedom, the sequences of pulses with random phase and the additional degree of freedom behind the Michelson interferometer possess a random phase and a random polarization, preferably random linear diagonal or linear antidiagonal polarization.

In a preferred embodiment for polarization as the additional degree of freedom, the pulses with random phase are converted in step iii) by interference of two pulses with random phase, preferably by interference on a conversion polarizing beam splitter in a Sagnac loop.

In a preferred embodiment for polarization as the additional degree of freedom, the conversion means is a Sagnac loop. In a preferred embodiment, the Sagnac loop comprises the conversion polarizing beam splitter and two reflection elements or a guidance element forming the Sagnac loop and at least one optical parametric oscillator. In a preferred embodiment, the path length through the Sagnac loop, preferably in the clockwise direction and the counter-clockwise direction, is *n*-times the repetition rate of the sequences of pulses with random phase with *n* = 1, 2, ... *m*.

In a preferred embodiment, the sequence of laser pulses entering the Sagnac loop by the conversion polarizing beam splitter is spilt up in two sequences of laser pulses by the conversion polarizing beam splitter, one traveling in the clockwise direction through the Sagnac loop and a second one traveling in the counter-clockwise direction through the Sagnac loop. In a preferred embodiment, a half-wave plate is arranged in one arm of the Sagnac loop in order to cause a polarization rotation to pump the optical parametric oscillator in both directions with pulses with the same polarization.

In a preferred embodiment, the Sagnac loop is pumped by a sequence of laser pulses, whereby the two sequences of pulses with random phase are generated in one optical parametric oscillator in the Sagnac loop pumped in two different directions. In a preferred embodiment, the Sagnac loop comprises two or more optical parametric oscillators, whereby the optical parametric oscillators in the Sagnac loop are arranged in such a way that pulses of the same and/or different optical parametric oscillators interfere at the conversion polarizing beam splitter.

In a preferred embodiment for polarization as the additional degree of freedom, the sequences of pulses with random phase and the additional degree of freedom behind the Sagnac loop possess a random phase and a random polarization, preferably random linear diagonal or linear antidiagonal polarization.

In a preferred embodiment, the additional degree of freedom is the orbital angular momentum and the random modes of the degree of freedom of the decoy state is a higher-order mode, preferably a Hermite-Gaussian mode, or a Laguerre-Gaussian mode, or an Ince-Gaussian mode, or another transversal mode.

In a preferred embodiment for orbital angular momentum as the additional degree of freedom, the pulse with random phase is converted in step iii) by transmission or reflection of a pulse with random phase on a phase plate, or a spatial light modulator, or in a multimode waveguide, or in a multimode fiber to a pulse with random phase and orbital angular momentum or another transversal mode as the additional degree of freedom. In a preferred embodiment for orbital angular momentum as the additional degree of freedom, the conversion means comprise one or more phase plates, or spatial light modulators, or in multimode waveguides, or in multimode fibers.

In a preferred embodiment for orbital angular momentum as the additional degree of freedom, the sequences of pulses with random phase and the additional degree of freedom behind the phase plate, or the spatial light modulator, or the multimode waveguide, or the multimode fiber possess a random phase and a random orbital angular momentum.

In a preferred embodiment, the additional degree of freedom is the time and the random modes of the degree of freedom of the decoy state is a time bin (early or late). The information in this embodiment is be encoded in the arrival time of photons (early or late). The pulses with time as the additional degree of freedom have beside the arrival time in addition random intensities, corresponding to one or several decoy states and signal states.

In a preferred embodiment for time as the additional degree of freedom, the pulses with random phase are converted in step iii) by an interference of two pulses with random phase, preferably by interference with a conversion beam splitter in a Sagnac loop.

In a preferred embodiment for time as the additional degree of freedom, the conversion means is a Sagnac loop with the conversion beam splitter. In a preferred embodiment, the Sagnac loop comprises the conversion beam splitter and two reflection elements or a guidance element forming the Sagnac loop.

In a preferred embodiment, the sequence of laser pulses entering the Sagnac loop by the conversion beam splitter is spilt up in two sequences of laser pulses by the conversion beam splitter, one traveling in the clockwise direction through the Sagnac loop and a second one traveling in the counter-clockwise direction through the Sagnac loop.

In a preferred embodiment for time as the additional degree of freedom, the Sagnac loop is pumped by a sequence of laser pulses, whereby the two sequences of pulses with random phase are generated in one optical parametric oscillator in the Sagnac loop pumped in two different directions.

In a preferred embodiment for time as the additional degree of freedom, the sequences of pulses with random phase and the additional degree of freedom behind the Sagnac loop possess a random phase and a random time bin (early or late).

In a preferred embodiment for time as the additional degree of freedom, the pulses with random phase are converted in step iii) by interference of two pulses with random phase, preferably by interference on a conversion beam splitter in a Michelson interferometer. In a preferred embodiment, the two interfering pulses in the Michelson interferometer are two pulses of two different sequences of pulses with random phase.

In a preferred embodiment for time as the additional degree of freedom, the conversion means is the Michelson interferometer. In a preferred embodiment, the Michelson interferometer comprises the conversion beam splitter and two reflection elements forming two arms in the Michelson interferometer.

In a preferred embodiment, the Michelson interferometer is pumped by a sequence of laser pulses. In a preferred embodiment, the sequence of laser pulses is spilt up in two sequences of laser pulses by the conversion beam splitter of the Michelson interferometer. In a preferred embodiment, one sequence of pulses with random phase is generated in each arm of the Michelson interferometer by one optical parametric oscillator arranged in each arm.

In a preferred embodiment for time as the additional degree of freedom, the sequences of pulses with random phase and the additional degree of freedom behind the Michelson interferometer possess a random phase and a random time bin (early or late).

In a preferred embodiment of the Sagnac loop and/or the Michelson interferometer, preferably for time and/or polarization, the conversion beam splitter or the conversion polarizing beam splitter of the generation means is the conversion beam splitter or the conversion polarizing beam splitter of the conversion means. In these examples, the beam splitter or the polarizing beam splitter fulfills two functions, the splitting of the sequence of pump pulses into two and the conversion of two pulses with random phase into one sequence of pulses with random phase and an additional degree of freedom.

In a preferred embodiment, the conversion means are used in parallel and/or sequential. By the use in parallel and/or sequential, the sequences of pulses with random phase and more additional degrees of freedom are generated.

In a preferred embodiment, the interference means is an interference beam splitter for an interference of at least two pulses, preferably two pulses from two different sequences of pulses with random phase and the additional degree of freedom. This embodiment can be used for example for the interference of two sequences of pulses with random phase and the additional degree of freedom generated in two unbalanced Mach-Zehnder interferometers, or generated by a random phase on two phase plates, or two spatial light modulators, or multimode waveguides, or multimode fibers.

In a preferred embodiment, the interference means is an unbalanced interferometer comprising two beam splitters, first an interferometer beam splitter and second an interference beam splitter, for an interference of at least two pulses at the second interference beam splitter, preferably two pulses from the same sequence of pulses with random phase and the additional degree of freedom. By this embodiment, two subsequent pulses interfere due to the time delay in the longer arm of the unbalanced interferometer. This embodiment can be used for example for the interference of two pulses out of one sequence of pulses with random phase and the additional degree of freedom generated in one unbalanced Mach-Zehnder interferometer, or the Michelson interferometer, or the Sagnac loop. In the unbalanced interferometer the incoming pulse is separated in two pulses with half intensity each by the interferometer beam splitter. One of the two pulses with half intensity is delayed in the long arm in order to interfere with the second pulse with half intensity of a subsequent incoming pulse.

In a preferred embodiment, the interference in step iv) in the interference means is a constructive interference, or a deconstructive interference. This embodiment is realized for the sequence of pulses with random phase with either *π* and 0. The advantage of this embodiment is the generation of decoy states and vacuum states.

In a preferred embodiment, the interference in step iv) in the interference means is a not complete constructive interference, or a not complete deconstructive interference. This embodiment is possible for the sequence of pulses with an additional phase shift behind the optical parametric oscillator in at least one sequence. The advantage of this embodiment is the generation of decoy states with a multitude of intensities.

In a preferred embodiment, by the interference of successively two pulses each in step iv) in the interference means successively decoy states with different intensity levels are generated, preferably two, or three, or more intensity levels, preferably decoy states and vacuum states.

In a preferred embodiment for the polarization as an additional degree of freedom, between the conversion means and the interference means a polarization rotation means is arranged in the path of one of the sequences of pulses with random phase and polarization is arranged in order to introduce an addition polarization rotation of the pulses of this sequence. In a preferred embodiment, the additional linear polarization rotation is in the range of largerO to 22,5°. The advantage of this example is that by the additional polarization rotation only in one sequence the intensity of the decoy states is changed.

In a preferred embodiment, the additional degree of freedom is the polarization and the random modes of the degree of freedom of the decoy state is the polarization state out of two mutually unbiased bases, preferably each non-orthogonal basis comprises two orthogonal polarization states.

In a preferred embodiment, the inventive method and source is a part of a quantum cryptography setup comprising the inventive setup as a source, a receiver and a quantum channel between the source and the receiver.

In a preferred embodiment, the sequence of pulses comprising decoy states is split up into two parts in the source in a step v), whereby the first part is used in the source in order to measure the intensity and the mode, and the second part is attenuated in order to reduce the pulses to a single photon level. In a preferred embodiment, the pulses with single photon level are transmitted to a receiver via the quantum channel, detected by the receivers and a quantum key is generated by the source and the receiver.

In a preferred embodiment, the attenuation in step v) and/or by the attenuation means reduces the average photon number of the pulses of the sequence of pulses comprising decoy states to a single photon level in order to generate signal states at single photon level and decoy states at single photon level, preferably for the key generation between the source and the receiver.

In a preferred embodiment, the average photon number of each pulse of the sequence of pulses comprising decoy states attenuated in step v) and/or by the attenuation means is dependent on the intensity of the pulse. The mean photon number of the signal state at single photon level is around 1 photon per pulse. The mean photon number of the decoy state at single photon level is below 1 photon per pulse.

In a preferred embodiment, the receiver comprises a detection means in order to detect the decoy state and in order to generate the quantum key.

In a preferred embodiment, the splitting means is a beam splitter, preferably a 50/50 beam splitter or a 99/1 beam splitter.

In a preferred embodiment, the detection means is a photodetector, or a diode, or a PIN-Diode in order to measure the intensity and the mode.

The above and other aspects, features and advantages of the present invention will become more apparent from the following detailed description when taken in conjunction with the accompanying drawings.

### Brief Description of the Drawings:

- Fig. 1:: schematic diagram of the inventive method and source for decoy state quantum key generation;
- Fig. 2:: first example of the inventive source for decoy state quantum key generation with two unbalanced Mach-Zehnder interferometers;
- Fig. 3:: second example of the inventive source for decoy state quantum key generation with a Sagnac loop;
- Fig. 4:: third example of the inventive source for decoy state quantum key generation with two phase plates;
- Fig. 5:: a first example of the phase generation means and conversion means for time as additional degree of freedom with a Sagnac loop;
- Fig. 6:: a second example of the phase generation means and conversion means for time as additional degree of freedom with a Michelson interferometer;
- Fig. 7:: schematic diagram of the inventive method with cascaded phase generation means;
- Fig. 8:: schematic diagram of the inventive method with nesting;
- Fig. 9:: schematic diagram of the inventive method with multiplexing;
- Fig. 10:: schematic diagram of the inventive method for decoy state quantum key generation with additional polarization shift;
- Fig. 11:: schematic diagram of the intensity and states with polarization modes;
- Fig. 12:: schematic diagram of the intensity and states with polarization modes with an additional polarization rotation in one sequence of pulses with random phase;
- Fig. 13:: intensities of the states of Fig. 12.

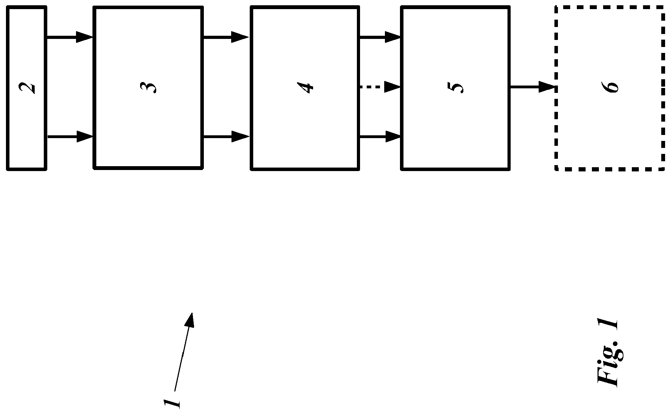

Fig. 1 shows a schematic diagram of the inventive method and source 1 for decoy state quantum key generation. In a first step, two sequences of laser pulses are generated by a pulse generation means 2. In a second step, the two sequences of laser pulses are converted into two sequences of pulses with random phase by a phase generation means 3. In a third step, the two sequences of pulses with random phase are converted into one (dashed arrow in Fig. 1) or two sequences of pulses with random phase and an additional degree of freedom by a conversion means 4. In a fourth step, pulses with random phase and an additional degree of freedom are combined by a interference means 5 in order to generate a sequence of pulses comprising decoy states. In the case of one sequence of pulses with random phase and an additional degree of freedom two subsequent pulses of the one sequence are used in the fourth step. In the case of two sequences of pulses with random phase and an additional degree of freedom one pulse from each sequence is used for the fourth step.

As a possible additional step in a splitting-, detection-, and attenuation means 6 the sequence of pulses comprising decoy states are split into two parts, whereby one part is detected in the source and the second part is attenuated and transmitted to a receiver in order to generate a quantum key between the source and the receiver.

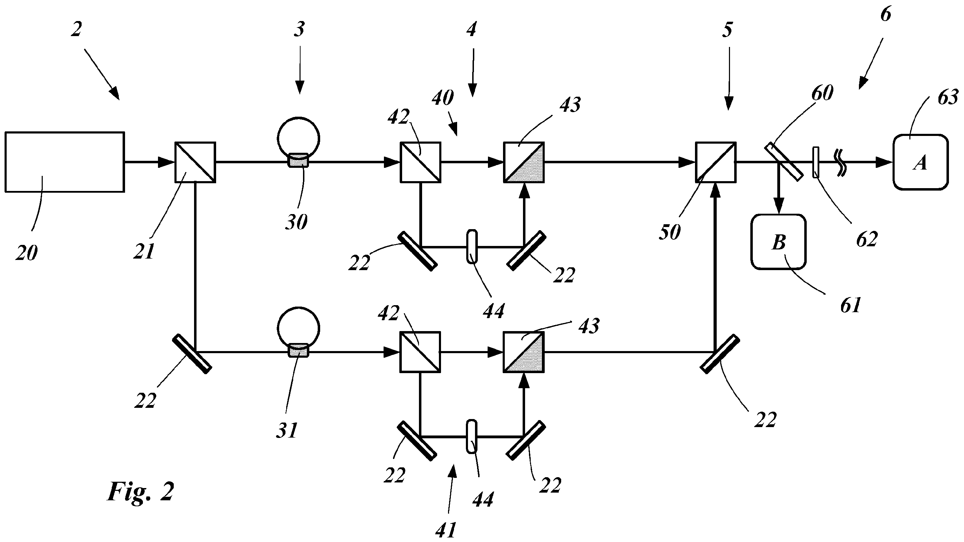

Fig. 2 shows a first example of the inventive source 1 for decoy state quantum key generation with two unbalanced Mach-Zehnder interferometers 40, 41. In this first example the polarization is the additional degree of freedom.

The pulse generation means 2 in Fig. 2 comprises a laser 20, a first beam splitter 21 and a mirror 22. In the laser 20 a sequence of laser pulses is generated and split up by the first beam splitter 21 into two sequences of laser pulses. The mirror 22 is used in this example to guide one sequence to the following optical components.

Behind the generation means 2 the phase generation means 3 is arranged, comprising in the example of Fig. 2 a first optical parametric oscillator 30 and a second optical parametric oscillator 31. Each optical parametric oscillator 30, 31 is pumped by one of the sequences of laser pulses generated by the generation means 2. In the example of Fig. 2 the first and second optical parametric oscillator 30, 31 is a µ-ring resonator comprising a non-linear crystal as non-linear optical medium arranged in a ring-resonator. By pumping the first and second optical parametric oscillator 30, 31 with the sequences of laser pulses with a maximum intensity above the threshold of the first and second optical parametric oscillator 30, 31, two sequences of pulses with random phase of either *π* and 0 are generated.

Behind the phase generation means 3 the conversion means 4 is arranged, comprising in the example of Fig. 2 two unbalanced Mach-Zehnder interferometers 40, 41, a first unbalanced Mach-Zehnder interferometer 40 and a second unbalanced Mach-Zehnder interferometer 41. Both unbalanced Mach-Zehnder interferometers 40, 41 comprise an input beam splitter 42 and an output polarizing beam splitter 43. The upper path between the input beam splitter 42 and the output polarizing beam splitter 43 is forming the short arm, and the lower path via the two mirrors 22 is forming the long arm of each unbalanced interferometer. In the long arm a half-wave plate 44 is arranged in the path in order to rotate the linear polarization of each pulse by 45°.

The function of the two unbalanced Mach-Zehnder interferometers 40, 41 is as follows: A first pulse with random phase possesses for example linear horizontal polarization and is split into two parts with half intensity by the first beam splitter 42 each following the short and the long arm through the unbalanced Mach-Zehnder interferometer. In the longer arm the linear horizontal polarization is rotated to linear vertical polarization and is delayed in the example of Fig. 2 by one pulse repetition rate in order to meet at the polarizing beam splitter 43 the subsequent pulse of the short arm. By interference of these to parts of the two pulses a pulse with random phase and random polarization is generated. In the example of Fig. 2 the random polarization can be diagonal or antidiagonal polarization. This conversion is realized in Fig. 2 in both unbalanced Mach-Zehnder interferometers 40, 41 generating two spatially separated sequences of pulses with random phase and polarization.

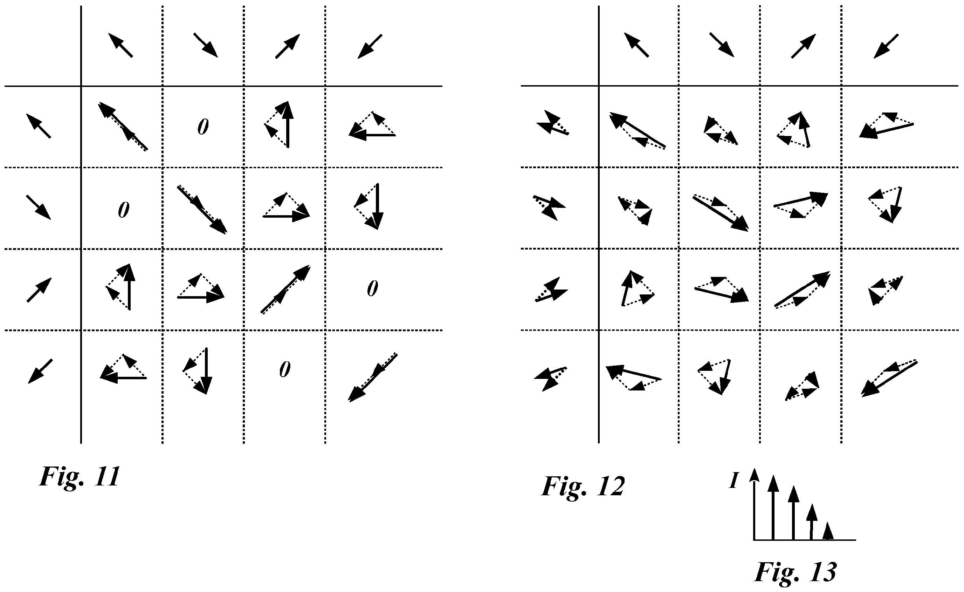

Behind the conversion means 4 the interference means 5 is arranged, comprising in the example of Fig. 2 an interference beam splitter 50. Two pulses of the two spatially separated sequences of pulses with random phase and polarization interfere at the interference beam splitter 50 and generate a sequence of pulses comprising decoy states. An example of the generated polarizations and intensities of the decoy states is given in Fig. 11.

Behind the interference means 5 in the example of Fig. 2 a splitting means 60, a detection means 61, and an attenuation means 62 are arranged in the source 1 in order to split the sequence of pulses comprising decoy states into a first part to be measured by the detection means 61 and a second part to be attenuated by the attenuation mean 62 and transmitted to a receiver 63.

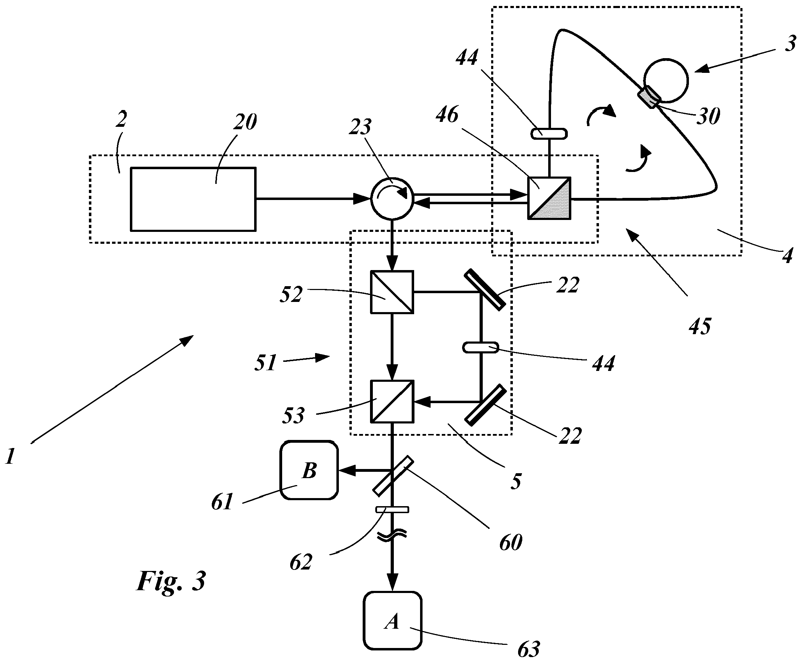

In Fig. 3 a second example of the inventive source 1 for decoy state quantum key generation and a Sagnac loop 45 is shown. By this second example the polarization is the additional degree of freedom. The pulse generation means 2 comprises a laser 20 and a polarizing beam splitter 46 of the Sagnac loop 45. The polarizing beam splitter 46 in the example of Fig. 3 fulfills two functions, the splitting of the sequence of pump pulses into two (clockwise and in counter-clockwise direction) and the conversion of two pulses with random phase into one sequence of pulses with random phase and polarization.

The Sagnac loop 45 is formed by the polarizing beam splitter 46 of the Sagnac loop 45 and the two paths in clockwise and in counter-clockwise direction (arrows in Fig. 3). The two paths can be formed by a fiber or by two or more additional mirrors (not shown in Fig. 3). In the Sagnac loop the phase generation means 3 is arranged in the middle of the Sagnac loop in order to be pumped by two sequences of laser pulses, the clockwise and in counter-clockwise direction.

In the example of Fig. 3 the phase generation means 3 is an optical parametric oscillator 30 which is in this example a µ-ring resonator comprising a non-linear crystal arranged in a ring-resonator. In one path a half-wave plate 44 is arranged in order to pump the phase generation means 3 with the same polarization, rotating the linear polarization by 45°.

By the two pump directions, two sequences of pulses with random phase are generated in the optical parametric oscillator 30, whereby two pulses with random phases meet at the polarizing beam splitter 46 of the Sagnac loop 45 where the two sequences of pulses with random phase are converted into one sequence of pulses with random phase and polarization. The conversion takes place like described for the polarization beam splitter 43 in Fig. 2.

The one sequence of pulses with random phase and polarization is guided via a circulator 23 to the interference means 5, which is in the case of Fig. 3 a combination unbalanced Mach-Zehnder interferometer 51 with a first and second beam splitter 52 and 53, two mirrors 22 and a half-wave plate 44 forming a short and a long arm. The first beam splitter 52 of the combination unbalanced Mach-Zehnder interferometer 51 splits one pulse into two parts with half intensity following the short and the long arm through the combination unbalanced Mach-Zehnder interferometer 51. In the longer arm the polarization is rotated by 45° and is delayed in the example of Fig. 3 by one pulse repetition rate so that the delayed pulse halve and a subsequent pulse halve of the short arm meet at the second beam splitter 53. By interference of these two parts of the two pulses a sequence of pulses comprising decoy states is generated.

The splitting-, detection-, and attenuation means 6 in Fig. 3 works as the splitting-, detection-, and attenuation means 6 in Fig. 2.

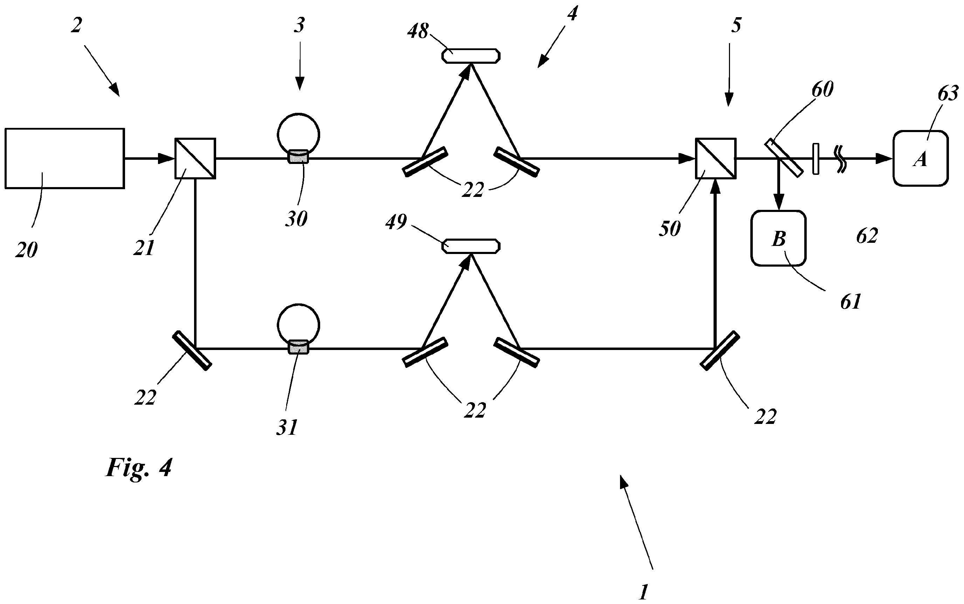

Fig. 4 shows a third example of the inventive source 1 for decoy state quantum key generation with two phase plates 48, 49. By this third example the orbital angular momentum is the additional degree of freedom.

The setup of Fig. 4 differs from the setup in Fig. 2 only in the conversion means 4. The conversion means 4 in Fig. 4 comprises a first phase plate 48 and a second phase plate 48. Each sequence of pulses with random phase possesses for example linear horizontal polarization and is reflected on the first phase plate 48 or the second phase plate 49 and thus converted in the example of Fig. 4 into Laguerre-Gaussian (LG) modes *LG*₀₁ or *LG*₀₋₁ with random phase respectively. Pulses with these modes interfere on the interference means 5 by the interference beam splitter 50. Two pulses of the two sequences of pulses with random phase and the LG modes interfere at the interference beam splitter 50 and exit as Hermite-Gaussian (HG) spatially multi-mode *HG*₀₁ or *HG*₁₀ depending on the phases of the input pulses. When both phases are equal *π* and 0 the result is the *HG*₀₁ mode, whereas for different phases, one phase *π* and the other phase 0 or vice versa, the result is the *HG*₁₀ mode.

The splitting-, detection-, and attenuation means 6 in Fig. 4 works as the splitting-, detection-, and attenuation means 6 in Fig. 2.

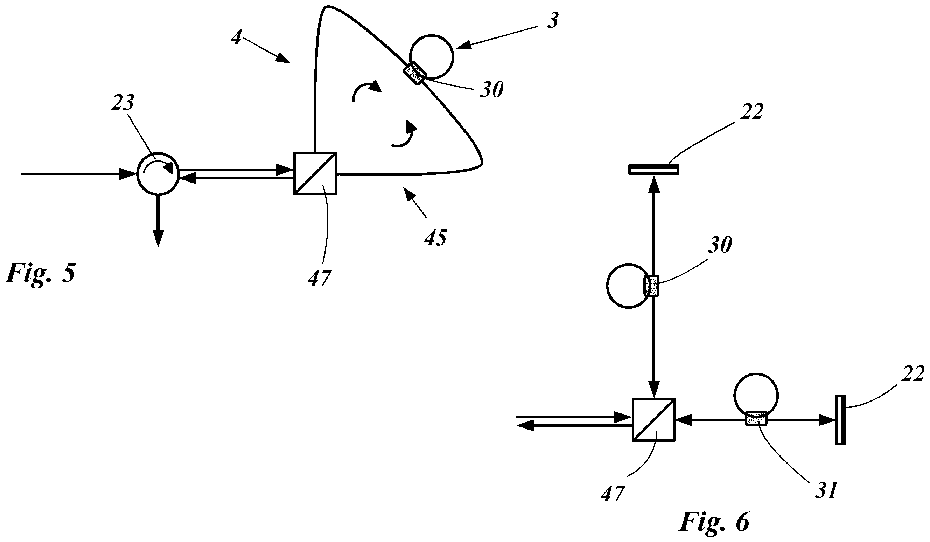

Fig. 5 shows a first example of the phase generation means 3 and conversion means 4 for time as additional degree of freedom with a Sagnac 45 loop. The phase generation means 3 and conversion means 4 of Fig. 5 can for example be used in a setup of Fig. 3.

In contrast to the Sagnac loop 45 of Fig. 3, in Fig. 5 the Sagnac loop 45 comprises a beam splitter 47 generating two sequences of laser pulses for the clockwise and the counter-clockwise direction of the Sagnac loop 45. The two sequences of laser pulses pumping the phase generation means 3 in both directions generating two sequences of pulses with random phase, whereby one sequence of pulses with random phase is traveling in the counter-clockwise direction and the second sequence of pulses with random phase is traveling in the clockwise direction.

These two sequences of pulses with random phase are converted into pulses with time bin at the beam splitter 47 of the Sagnac loop 45 which fulfills two functions in the example of Fig. 5, the splitting of the sequence of pump pulses into two (clockwise and in counter-clockwise direction) and the conversion of two pulses with random phase into one sequence of pulses with random phase and a time bin. Time bin encoded pattern means here that two subsequent pulses are sent in the Sagnac loop generating a total of four pulses with random phase, two first pulses and two subsequent second pulses. Depending on the phase of each pulse, the first pulses interfere with the beam splitter 47 and the second pulses interfere with the beam splitter 47 constructive or destructive. This example leads to four different outcomes, both pulses (the first and the subsequent second) exist or are eliminated, or only the first or the second pulse exists.

Fig. 6 shows a second example of the phase generation means 3 and conversion means 4 for time as additional degree of freedom with a Michelson interferometer with two arms and a beam splitter 47. The arms are formed by the two output ports of the beam splitter 47 and two mirrors 22. In each arm an optical parametric oscillator 30 and 31 is arranged in order to generate sequences of pulses with random phase which are converted into a sequence of pulses with random phase and a time bin.

In addition, the generation means 3 in the example of Fig. 6 can be pumped in one or in two directions. Pumping in one direction is realized by a mirror 22 transmitting the pump pulses and reflecting the pulses with random phase. Pumping in two directions is realized by a mirror 22 reflecting the pump pulses and the pulses with random phase.

In addition, the beam splitter 47 in Fig. 6 can be replaced by a polarizing beam splitter in order to use this setup for the generation of a sequence of pulses with random phase and polarization as additional degree of freedom. In this case an additional wave plate is arranged in one of the two arms as described for the wave plate in the Sagnac loop in Fig. 3.

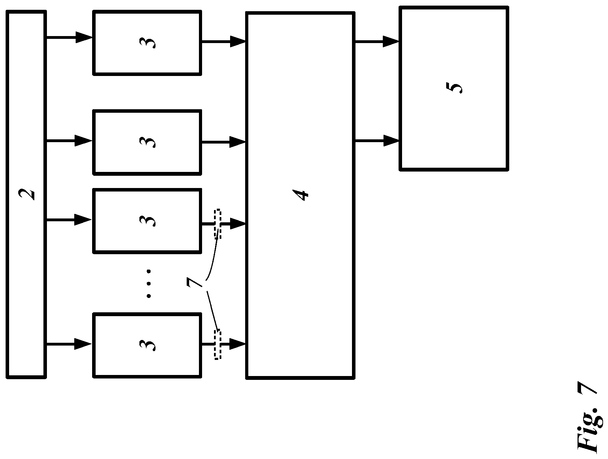

Fig. 7 shows a schematic diagram of the inventive method with cascaded phase generation means 3.

In this example multiple phase generation means 3 are arranged in parallel, whereas each phase generation means 3 in this example comprises one optical parametric oscillator. All generation means 3 are pumped by the same pulse generation means 2. It is also possible that each generation means is pumped by two sequences of laser pulses in order to generate two or one sequence of pulses with random phase. The conversion of the sequences of pulses with random phase into one or more sequences of pulses with random phase and an additional degree of freedom is realized in the conversion means 4 as shown in Fig. 7.

In addition, a phase rotation means 7 can be placed optional (dashed lines) behind one or more generation means 3 in order to introduce an additional phase shift *ϕ* from *π* and 0 to *π* + *ϕ* and 0 + *ϕ.*

All sequences of pulses with random phase and an additional degree of freedom are combined in the interference means 5 in order to generate sequences of pulses comprising decoy states, whereby the decoy states in this example can possess various intensities due to the additional phase shift.

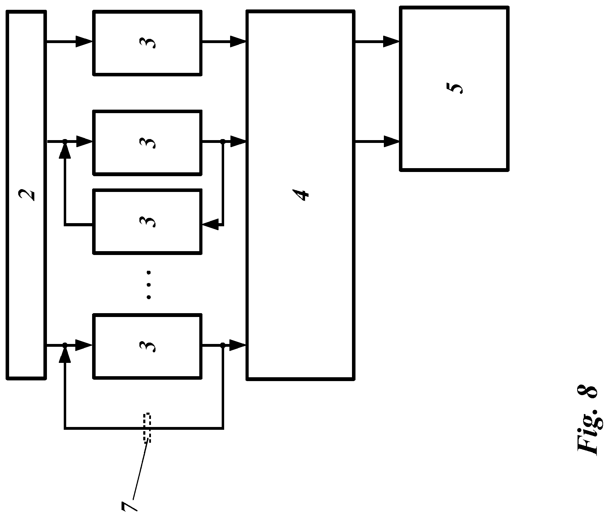

Fig. 8 shows a schematic diagram of the inventive method with nesting. This is realized by a repatriation of the sequences of pulses with random phase or a part of the sequences of pulses with random phase into the phase generation means 3 as shown in Fig. 8. This can be realized with an additional phase generation means (middle in Fig. 8), or without an additional phase generation means 3 (left in Fig. 8), or with an optional phase rotation means 7.

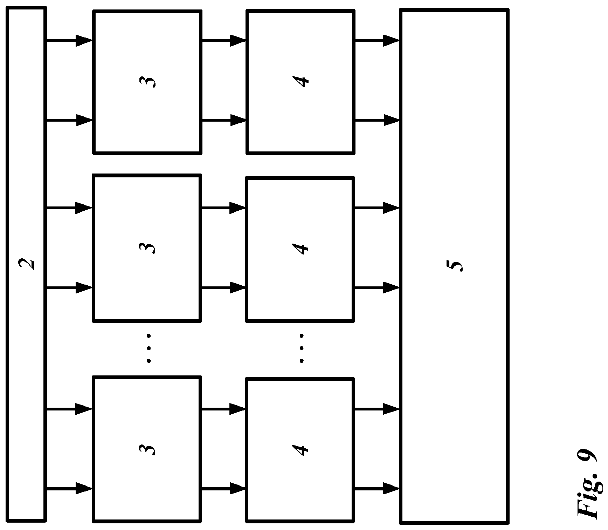

Fig. 9 shows a schematic diagram of the inventive method with multiplexing. In this example, multiple conversion means 4 are arranged in the setup, whereby each conversion means 4 enables a conversion of sequences of pulses with random phase and a different degree of freedom. All these sequences are combined in the interference means 5, whereby the interference means 5 can comprise for the combination of multiple beams multiple beam splitters and/or multiple polarizing beam splitters.

The examples of Fig. 7, 8 and 9 can be combined in order to realize for example a multiplexing with additional cascading, whereby the decoy states in this example can possess various intensities due to the additional phase shift and various additional degrees of freedom because of the use of different conversion means.

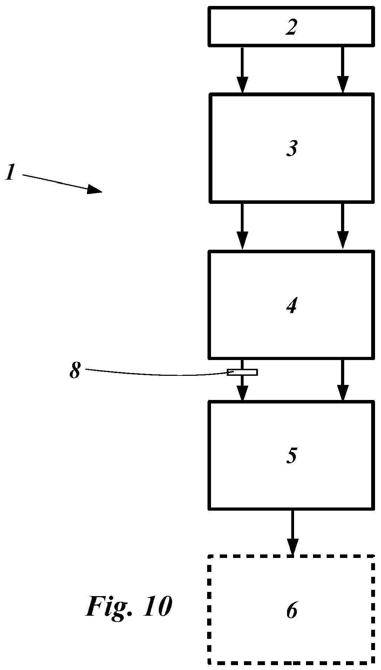

Fig. 10 shows an example of the inventive method and source 1 for decoy state quantum key generation and differs from Fig. 1 only by an additional polarization shift in one sequences of pulses with random phase by a polarization rotation means 8. The generated decoy states by this setup are shown in Fig. 12.

Fig. 11 and 12 show schematic diagrams for the input states and the output states with polarization modes. The first coulomb and the row are the input pulses with random polarizations with random phases in the interference means 5, for example the beam splitter 50 from Fig. 2. The output pulses are shown in the remaining coulombs and rows.

Fig. 11 and 12 are read in this way that a pulse with the polarization in the first row in the second coulomb interfere with a pulse with the polarization of the second row in the first coulomb and the result of this interference is a pulse with polarization and intensity as shown in the second coulomb and the second row. By that, the 16 possible outcomes are obtained by two times four input states. Horizontal arrow denotes horizontal linear polarization; vertical arrow denotes vertical linear polarization; the arrows at 45° denote linear diagonal or linear antidiagonal polarization; the intensity of the generated decoy states is denoted by the length of the arrows.

Fig. 11 shows the interference of input states with parallel or anti-parallel polarization states with random phase and the generated decoy states. Fig. 12 shows the interference of input states with not complete parallel or anti-parallel polarization states by an additional polarization rotation by the polarization rotation means 8 with random phase and the generated decoy states. By the additional polarization rotation different decoy states with different intensity are generated. The intensities of the decoy states from Fig. 12 are shown in a diagram in Fig. 13.

### Reference signs:

- 1: source
- 2: pulse generation means
- 3: phase generation means
- 4: conversion means
- 5: interference means
- 6: splitting-, detection-, and attenuation means
- 7: phase rotation means
- 8: polarization rotation means

- 20: laser
- 21: first beam splitter
- 22: mirror
- 23: circulator

- 30: first optical parametric oscillator
- 31: second optical parametric oscillator

- 40: first unbalanced Mach-Zehnder interferometer
- 41: second unbalanced Mach-Zehnder interferometer
- 42: beam splitter of the interferometer
- 43: polarizing beam splitter of the interferometer
- 44: half-wave plate
- 45: Sagnac loop
- 46: polarizing beam splitter of the Sagnac loop or the Michelson interferometer
- 47: beam splitter of the Sagnac loop or the Michelson interferometer
- 48: first phase plate
- 49: second phase plate
- 50: interference beam splitter
- 51: combination unbalanced Mach-Zehnder interferometer
- 52: first beam splitter of the combination interferometer
- 53: second beam splitter of the combination interferometer

- 60: splitting means
- 61: detection means of the source
- 62: attenuator
- 63: receiver

## Claims

1. Method for decoy state quantum key generation comprising the steps, preferably in this order,
i) generation of at least two sequences of laser pulses by a pulse generation means (2);
ii) conversion of the at least two sequences of laser pulses into at least two sequences of pulses with random phase by a phase generation means (3), whereby each pulse of each sequence has a random phase;
iii) conversion of the sequences of pulses with random phase into one or more sequences of pulses with random phase and an additional degree of freedom in a conversion means (4);
iv) combination of at least two pulses of the one or more sequences of pulses with random phase and the additional degree of freedom to generate a decoy state, and continue the combination for subsequent pulses in order to generate a sequence of pulses comprising decoy states;
**characterized in that**
the combination in step iv) is an interference of the at least two pulses in an interference means (5).

2. Method according to claim 1,
**characterized in that**
a decoy state with random intensity and a random mode of the degree of freedom is generated by the random phases of the two pulses in step iv).

3. Method according to claim 1 or 2,
**characterized in that**
in step iv) by the combination of at least two pulses of the one or more sequences of pulses with random phase and the additional degree of freedom a decoy state or a vacuum state is generated in order to generate a sequence of pulses comprising decoy states and vacuum states.

4. Method according to one of the claims 1 to 3,
**characterized in that**
the maximal intensity of the pulsed pump beam is above the threshold of the phase generation means (3), preferably above the threshold of an optical parametric oscillator (30, 31), and/or
the intensity between two pump pulses is below the threshold of the phase generation means (3), preferably of the optical parametric oscillator (30, 31).

5. Method according to one of the claims 1 to 4,
**characterized in that**
the at least two sequences of laser pulses in step ii) are converted by optical parametric oscillation into at least two sequences of pulses with random phase.

6. Method according to one of the claims 1 to 5,
**characterized in that**
in order to generate the at least two sequences of pulses with random phase the phase generation means (3), preferably in step iii), comprise either
at least two optical parametric oscillators (30, 31), whereby each optical parametric oscillator generates one sequence of pulses with random phase, and/or
one or more optical parametric oscillators (30) pumped in two different directions, whereby each of the one or more optical parametric oscillator (30) generates two sequences of pulses with random phase by the two different pump directions.

7. Method according to one of the claims 1 to 6,
**characterized in that**
the phase of each pulse of the sequence of pulses with random phase is either *π* and 0, preferably random either *π* and 0, preferably the random phase of each pulse is a random result due to quantum noise in the optical parametric oscillator (30, 31).

8. Method according to one of the claims 1 to 7,
**characterized in that**
the additional degree of freedom is the polarization, and/or the orbital angular momentum, and/or the time, and/or the frequency.

9. Method according to claim 8,
**characterized in that**
for polarization as the additional degree of freedom, the pulses with random phase are converted in step iii) by interference of two pulses with random phase by interference on a conversion polarizing beam splitter (43) in an unbalanced Mach-Zehnder interferometer (40, 41), and/or
for polarization as the additional degree of freedom, the pulses with random phase are converted in step iii) by interference of two pulses with random phase by interference on a conversion polarizing beam splitter (46) in a Michelson interferometer, and/or
for polarization as the additional degree of freedom, the pulses with random phase are converted in step iii) by interference of two pulses with random phase by interference on a conversion polarizing beam splitter (46) in a Sagnac loop (45), and/or
for orbital angular momentum as the additional degree of freedom, the pulse with random phase is converted in step iii) by transmission or reflection of a pulse with random phase on a phase plate (48, 49), or a spatial light modulator, or in a multimode waveguide, or in a multimode fiber to a pulse with random phase and orbital angular momentum or another transversal mode as the additional degree of freedom, and/or
for time as the additional degree of freedom, the pulses with random phase are converted in step iii) by an interference of two pulses with random phase by interference with a conversion beam splitter (47) in a Sagnac loop (45), and/or
for time as the additional degree of freedom, the pulses with random phase are converted in step iii) by interference of two pulses with random phase by interference on a conversion beam splitter (47) in a Michelson interferometer.

10. Method according to one of the claims 1 to 9,
**characterized in that**
by the interference of successively two pulses each in step iv) in the interference means (5) successively decoy states with different intensity levels are generated.

11. Method according to one of the claims 1 to 10,
**characterized in that**
the sequence of pulses comprising decoy states is split up into two parts in the source (1) in a step v), whereby the first part is used in the source (1) in order to measure the intensity and the mode, and the second part is attenuated in order to reduce the pulses to a single photon level

12. Source (1) for decoy state quantum key generation, comprising a pulse generation means (2), a phase generation means (3), a conversion means (4), an interference means (5), a splitting means (60), a detection means (61), and an attenuation means (62) in order to generate a sequence of pulses comprising decoy states, and
the splitting means (60), the detection means (61) and the attenuation means (62) are arranged behind the interference means (5) in order to split the sequence of pulses comprising decoy states into a first part to be measured by the detection means (61) and a second part to be attenuated by the attenuation means (62) and transmitted to a receiver (63),
**characterized in that**
the pulse generation means (2) generates at least two sequences of laser pulses, and
the phase generation means (3) is arranged behind the pulse generation means (2) and is pumped by the at least two sequences of laser pulses and generates two sequences of pulses with random phase, whereby each pulse of each sequence has a random phase, and
either the conversion means (4) is arranged behind the phase generation means (3) or the phase generation means (3) is arranged in the conversion means (4), in order to add an additional degree of freedom to the sequences of pulses with random phase by the conversion means (4) to generate one or more sequences of pulses with random phase and an additional degree of freedom, and
the interference means (5) is arranged behind the conversion means (4) in order combine at least two pulses each of the one or more sequences of pulses with random phase and the additional degree of freedom in order to generate a sequence of pulses comprising decoy states.

13. Source (1) according to claim 12,
**characterized in that**
the conversion means (4) comprises at least one or more optical parametric oscillators (30, 31), preferably the optical parametric oscillator (30, 31) is a µ-ring resonator comprising a non-linear optical medium and a resonator.

14. Source (1) according to claim 12 or 13,
**characterized in that**
for polarization as the additional degree of freedom, the conversion means (4) is/are one or more unbalanced Mach-Zehnder interferometer/s (40, 41), and/or
for polarization as the additional degree of freedom, the conversion means (4) is a Michelson interferometer, preferably with a conversion polarizing beam splitter (46), and/or
for polarization as the additional degree of freedom, the conversion means (4) is a Sagnac loop (45) with a conversion polarizing beam splitter (46), and/or
for orbital angular momentum as the additional degree of freedom, the conversion means (4) comprise one or more phase plates (48, 49), or spatial light modulators, or in multimode waveguides, or in multimode fibers, and/or
for time as the additional degree of freedom, the conversion means (4) is a Sagnac loop (45) with a conversion beam splitter (47), and/or
for time as the additional degree of freedom, the conversion means (4) is a Michelson interferometer with a conversion beam splitter (47).

15. Source (1) according to one of the claims 12 to 14,
**characterized in that**
the interference means (5) is an interference beam splitter (50) for an interference of at least two pulses, preferably two pulses from two different sequences of pulses with random phase and the additional degree of freedom, or
the interference means (5) is an unbalanced interferometer (51) comprising two beam splitters, first an interferometer beam splitter (52) and second an interference beam splitter (53), for an interference of at least two pulses at the second interference beam splitter (53) of the unbalanced interferometer (51), preferably two pulses from the same sequence of pulses with random phase and the additional degree of freedom.
